# EUROPÄISCHE PATENTSCHRIFT

(11) **EP 1 533 183 B1**
(45) Veröffentlichungstag und Bekanntmachung des Hinweises auf die Patenterteilung: **11.06.2008**
(21) Anmeldenummer: 04025630.7
(22) Anmeldetag: 28.10.2004
(51) Int. Cl.: B60R 5/00

(54) **Transportbehälter-Einrichtung für Fahrzeuge**
Transport container for a vehicle
Conteneur de transport pour véhicule

(30) Priorität: 19.11.2003 DE 10354160
(43) Veröffentlichungstag der Anmeldung: 25.05.2005
(73) Patentinhaber: BOS GmbH & Co. KG, 73760 Ostfildern (DE)
(72) Erfinder: Sitzler, Wolfgang, 42111 Wuppertal (DE); Salewski, Jürgen, 40599 Düsseldorf (DE)
(74) Vertreter: Ostriga, Sonnet, Wirths & Roche

(56) Entgegenhaltungen:
- EP-A- 0 985 580
- DE-A- 10 132 081
- US-A- 5 516 191

## Beschreibung

Die Erfindung betrifft eine Transportbehälter-Einrichtung für Fahrzeuge gemäß dem Oberbegriff des Anspruches 1.

Eine derartige Transportbehälter-Einrichtung ist aus der DE 101 32 081 A1 bekannt. Dort ist das Transportbehältnis gemäß dem Ausführungsbeispiel der Fig. 2 als Skisackmodul ausgebildet und weist einen in Fahrtrichtung vorderen Deckel und einen in Fahrtrichtung hinteren Deckel auf, die beide im Bereich eines Fußes des Transportbehältnisses schwenkbar angelenkt sind. Der Innenraum des Transportbehältnisses dient der Aufnahme eines zusammengefalteten Skisacks. Die Transportbehälter-Einrichtung ist bei der DE 101 32 081 A1 gemäß dem Ausführungsbeispiel der Fig. 2 als Durchladeeinrichtung ausgebildet.

Es ist bereits bekannt, ein derartiges Transportbehältnis bei Bedarf von dem fahrzeugseitigen Halterahmen zu lösen und ein alternatives Transportbehältnis als Einsatzmodul, beispielsweise ein Kühlschrankmodul oder ein Verbandskastenmodul, einzusetzen. Je nach Bedarf kann der Benutzer das passende Modul auswählen und in die beispielsweise in der Fond-Sitzlehne dafür vorgesehene Halteaussparung einsetzen.

Bei einem beispielsweise als Kühlschrankmodul ausgebildeten Transportbehältnis ist ein Deckelelement vorgesehen, welches nach Art einer Kühlschranktür öffenbar ist und Zugang zu den im Kühlraum angeordneten zu kühlenden Lebensmitteln ermöglicht.

Aus der EP 985 580 A geht eine Transportvorrichtung hervor, die ein Rahmengehäuse und ein Zusatzgehäuse aufweist. Das Zusatzgehäuse kann einen Deckel ausbilden, der einer Öffnungsfläche des Rahmengehäuses zugeordnet ist. Gemäß einer Variante kann das Zusatzgehäuse auch die Funktion eines Deckels übernehmen. Bei der Variante kann das Zusatzgehäuse das Rahmengehäuse freigeben, um die Ausbreitung eines Skisackbehälters, der in dem Rahmengehäuse zusammengelegt ist, zu gestatten. Das Zusatzgehäuse kann alternativ als Kühlraum, z.B. als elektrisch betriebene Kühlbox ausgebildet werden. Auch kann das Zusatzgehäuse als Aufnahme- bzw. Montageraum für Telekommunikationsmittel genutzt werden. Der Druckschrift ist nicht zu entnehmen, dass das Zusatzgehäuse relativ zu dem Rahmengehäuse schwenkbar ausgebildet ist. Der Klappdeckel kann einen Deckel ausbilden, der einer Öffnungsfläche des Rahmengehäuses zugeordnet ist. In diesem Falle zeigt die EP 985 580 A eine Transportbehälter-Einrichtung nach dem Oberbegriff des Anspruches 1, wobei der Deckel schwenkbar angeordnet ist.

Es besteht das Bedürfnis und damit die Aufgabe der Erfindung, die aus der EP 985 580 A bekannte Transportbehälter-Einrichtung des Oberbegriffes des Anspruches 1 derart weiterzuentwickeln, dass bei einfacher Konstruktion eine variablere Verwendung möglich ist.

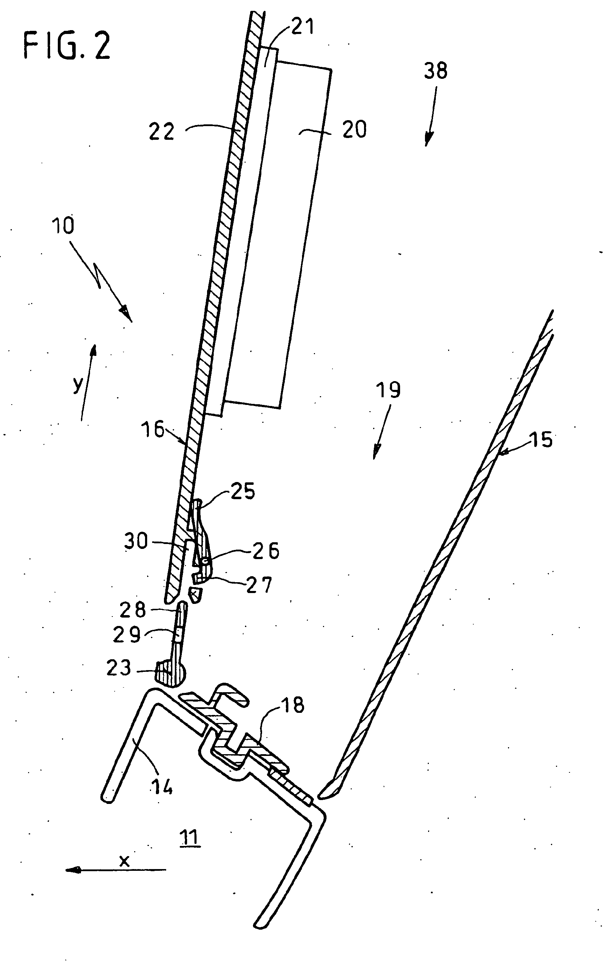

Die Erfindung löst diese Aufgabe mit den Merkmalen des Anspruches 1, insbesondere mit denen des Kennzeichenteils, und ist demgemäß **dadurch gekennzeichnet,** dass an dem Deckelelement eine Funktionseinheit, wie z. B. Spielkonsole, DVD-Abspielgerät, Monitor, Becherhalter, od. dgl. angeordnet ist, dass das Deckelelement von dem Transportbehälter und/oder von dem Halterahmen, insbesondere zum Zwecke des Austausches mit einem weiteren Deckelelement, vollständig lösbar ist (Fig. 2), dass eine Befestigungsvorrichtung für das Deckelelement vorgesehen ist, mit der das Deckelelement fahrzeugseitig lösbar festlegbar ist, und dass das fahrzeugseitig festgelegte Deckelelement relativ zu dem Halterahmen schwenkbar angeordnet ist.

Das Prinzip der Erfindung besteht somit im wesentlichen darin, das Deckelelement lösbar zu gestalten, so dass dieses beispielsweise in besonderen Einbausituationen, z. B. wenn es in aufgeklapptem Zustand ansonsten stören würde, entfernt werden kann.

Die erfindungsgemäße Transportbehälter-Einrichtung ist beispielsweise auch in solchen Einbausituationen einsetzbar, in denen eine bei Vorrichtungen des Standes der Technik bisher zwingend erforderliche Auflagefläche für das geöffnete Deckelelement, die typischerweise von einer Armlehne oder einem sonstigen Polsterteil bereitgestellt wird; entbehrlich ist. Fehlt dem Fahrzeug eine derartige Armlehne oder ist aufgrund einer anderen Einbausituation ein derartiges, eine Auflagefläche bietendes Polsterteil nicht vorhanden, kann das Deckelelement auf einfache Weise von dem Halterahmen oder von dem Transportbehälter gelöst werden.

Insbesondere wird bei der erfindungsgemäßen Transportbehälter-Einrichtung nunmehr eine Anwendung möglich, bei der dem Deckelelement eine Funktionseinheit zugeordnet ist.

Gemäß der Erfindung ist an dem Deckelelement eine Funktionseinheit, wie z. B. Spielkonsole, DVD-Abspielgerät, Monitor, Becherhalter od. dgl., angeordnet.

Das Deckelelement mit der daran angeordneten, insbesondere darauf befestigten Funktionseinheit ist auf diese Weise mittels der Befestigungsvorrichtung lösbar an dem Halterahmen oder an dem Transportbehältnis anbringbar. Das Deckelelement stellt nunmehr ein austauschbares Modul dar, welches je nach Einsatzzweck ein Becherhaltermodul, ein Spielkonsolenmodul, ein DVD- oder ein Monitormodul etc. sein kann. Zum Austausch des Moduls muss daher nur noch das Deckelelement von der fahrzeugseitigen Befestigungsstelle gelöst und durch ein wunschgemäßes Modul ersetzt werden.

Erfindungsgemäß kann z. B. vorgesehen sein, das Deckelelement mittels der Befestigungsvorrichtung unmittelbar am Halterahmen zu befestigen oder alternativ an dem am Halterahmen festgelegten Transportbehältnis, beispielsweise an einem Einbaurahmen des Transportbehältnisses. Als Funktionseinheit im Sinne der vorliegenden Erfindung wird dabei jede, eine besondere Gebrauchsfunktion bereitstellende Einheit gebildet. Dabei muss es sich nicht zwingend um eine elektronische Funktionseinheit, wie Audio- oder Videogerät etc. handeln. Gleichermaßen können auch Funktionseinheiten wie Armlehnen, Staufächer oder Bedienelemente, z.B. für elektrische Fensterheber od. dgl. vorgesehen werden.

Für den Fall, dass eine Reihe unterschiedlicher Module mit unterschiedlichen Funktionseinheiten vorgesehen ist, kann erfindungsgemäß eine preiswerte Realisierung eines derartigen Modulsystems erreicht werden, da die Austauschmodule neben der erforderlichen besonderen Funktionseinheit nur noch das Deckelelement aufweisen müssen. Es ist erfindungsgemäß entbehrlich, jeder Funktionseinheit ein vollständiges Transportbehältnis mit einem eigenen Einbaurahmen zuzuordnen. Der einmal am Halterahmen festgelegte Einbaurahmen des Transportbehältnisses und der von dem Einbaurahmen mit begrenzte Innenraum des Transportbehältnisses ermöglicht die Anbringung unterschiedlicher Deckelelemente mit entsprechenden unterschiedlichen Funktionseinheiten.

Das Deckelelement ist, wie beim Stand der Technik, für den Fall, dass es fahrzeugseitig festgelegt ist, relativ zu dem Halterahmen schwenkbar angeordnet. In diesem Falle ist vorteilhafterweise an dem der Schwenkachse fernen Bereich, insbesondere Randbereich, des Deckelelementes ein Riegelelement vorgesehen, wie es in der DE 101 32 081 A1 in Fig. 2 mit dem Bezugszeichen 24 angedeutet ist.

Gemäß einer vorteilhaften Ausgestaltung der Erfindung bildet das in seinem festgelegten Zustand befindliche Deckelelement eine in Fahrtrichtung des Fahrzeugs vordere Begrenzungswand des Innenraums des Transportbehältnisses aus. Diese Ausgestaltung der Erfindung ist insbesondere bei Anbringung des Transportbehältnisses in einer Kfz-Fondlehne vorteilhaft, weil auf diese Weise ein Passagier vom Passagierraum heraus einen Austausch des Deckelelementes mit Funktionseinheit auf besonders einfache und komfortable Weise vornehmen kann.

Gemäß einer weiteren vorteilhaften Ausgestaltung der Erfindung ist ein Betätigungselement zur Betätigung der Befestigungsvorrichtung, insbesondere zur Lösung der Befestigungsvorrichtung vorgesehen. Ein derartiges Betätigungselement ermöglicht eine besonders einfache Handhabung zur Bewerkstelligung der fahrzeugseitigen Festlegung beziehungsweise zur Lösung des Deckelelementes von seiner fahrzeugseitigen Befestigungsstelle.

Gemäß einer weiteren vorteilhaften Ausgestaltung der Erfindung ist das Betätigungselement bei geöffnetem Deckelelement zugänglich. Diese Ausgestaltung der Erfindung verhindert, dass bei geschlossenem Deckelelement eine versehentliche, unbeabsichtigte Lösung des Deckelelementes von der fahrzeugseitigen Befestigungsstelle erfolgt.

Gemäß einer weiteren vorteilhaften Ausgestaltung der Erfindung weist das Deckelelement eine Tragvorrichtung für das Funktionsteil auf. Beispielsweise kann auf der dem Innenraum des Transportbehältnisses zugewandten Seite des Deckelelementes eine Schienenanordnung od. dgl. vorgesehen sein, die die Funktionseinheit beispielsweise relativ zu dem Deckelelement verlagerbar hält.

Gemäß einer weiteren vorteilhaften Ausgestaltung der Erfindung ist die Befestigungsvorrichtung als Schnappverbindung ausgebildet. Auf diese Weise wird eine besonders komfortable Bewerkstelligung der fahrzeugseitigen Festlegung des Deckelelementes ermöglicht. Auch kann dem Benutzer aufgrund der Schnappverbindung und einer damit verbundenen akustischen Anzeige, wie beispielsweise einem Geräusch beim Einschnappen eines Schnapphakens, signalisieren, dass die Festlegung ordnungsgemäß erfolgt ist. Andererseits bieten sich bei Realisierung einer Schnappverbindung auch besonders einfache Möglichkeiten hinsichtlich einer geführten Bewegung des Deckelelementes relativ zu der fahrzeugseitigen Befestigungsstelle, beispielsweise durch Anordnung geeigneter Führungsflächen.

Weitere Vorteile der Erfindung ergeben sich aus den nicht zitierten Unteransprüchen sowie anhand der nun folgenden Beschreibung von zwei in den Figuren dargestellten Ausführungsbeispielen. Darin zeigen:
- Fig. 1: in stark schematisierter teilgeschnittener Seitenansicht einen Befestigungsbereich des Transportbehälters an dem fahrzeugseitigen Halterahmen mit einem in Befestigungsposition befindlichem geschlossenen Deckelelement,
- Fig. 2: das Ausführungsbeispiel der Fig. 1 mit einem geöffneten und von der fahrzeugseitigen Befestigungsstelle gelösten Deckelelement,
- Fig. 3: in einer Darstellung gemäß Fig. 1 ein zweites Ausführungsbeispiel mit einer veränderten Befestigungsvorrichtung, und
- Fig. 4: in einer Darstellung gemäß Fig. 2 das Ausführungsbeispiel der Fig. 3.

Die in ihrer Gesamtheit in den Figuren mit 10 bezeichnete Transportbehälter-Einrichtung für Fahrzeuge ist in den Figuren lediglich ausschnittsweise und sehr stark schematisiert dargestellt. Zur Vermeidung von Wiederholungen wird Bezug genommen auf die DE 101 32 081 A1, die eine vergleichbare Transportbehälter-Einrichtung 10 zeigt.

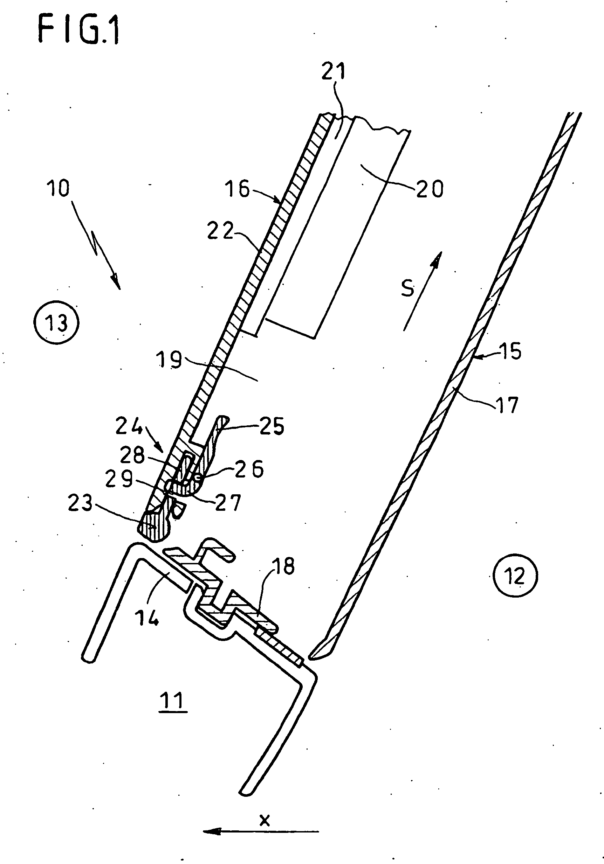

Die Transportbehälter-Einrichtung 10 gemäß Fig. 1 ist an einer Kfz-Fondlehne 11 angebracht, die einen Laderaum 12 von einem Fahrgastraum 13 eines in Fahrtrichtung x fahrbaren Kfzs trennt. Die ausschnittsweise, abgebrochene Darstellung der Lehne 11, eines lehnenseitig festgelegten Halterahmens 14 und eines Abschnitts eines Transportbehältnisses 15 entspricht im wesentlichen dem bezüglich Fig. 12 der DE 101 32 081 A1 linkeren unteren Randabschnitt.

Aus der Fig. 2 der DE 101 32 081 A1 ist es bereits bekannt, einem Transportbehältnis ein in Fahrtrichtung vorderes Deckelelement 23 und ein in Fahrtrichtung hinteres Deckelelement 22 zuzuordnen. Bei der Transportbehälter-Einrichtung des Standes der Technik sind beide Deckelelemente 22, 23 in einem Fußbereich des Transportbehälters schwenkbar an einen Einbaurahmen angelenkt.

Das Ausführungsbeispiel der Fig. 1 der vorliegenden Patentanmeldung zeigt lediglich einen Fußbereich eines Transportbehältnisses 15, welches sich bezüglich Fig. 1 nach rechts oben weitererstreckt. In Erstreckungsrichtung S befindet sich auch ein nicht dargestellter Kopfbereich des Transportbehältnisses 15, der mittels eines nicht dargestellten Riegelelementes in einem nicht dargestellten Kopfbereich des Halterahmens 14 befestigbar ist. Ein derartiges Riegelelement ist beispielsweise in der Fig. 1 der DE 101 32 081 A1 beschrieben und dort mit dem Bezugszeichen 27 bezeichnet. Für den Fall, dass das Transportbehältnis 15 gemäß Fig. 1 der vorliegenden Patentanmeldung lösbar an dem fahrzeugseitig festgelegten Halterahmen 14 befestigbar ist, wie es bei dem Ausführungsbeispiel der Erfindung vorgesehen ist, ist ein mit dem Riegelelement des Standes der Technik vergleichbares Riegelelement vorgesehen.

Gemäß Fig. 1 weist das Transportbehältnis 15 eine in Fahrtrichtung x vordere Wand 16 und eine in Fahrtrichtung x hintere Wand 17 auf. Die beiden Wände 15, 16 begrenzen gemeinsam mit einem in Umfangrichtung umlaufenden Einbaurahmen 18, der mit dem in der DE 101 32 081 A1 beschrieben und dort mit dem Bezugszeichen E bezeichneten Einbaurahmen vergleichbar ist, einen Innenraum 19 des Transportbehältnisses 15.

Der Innenraum 19 dient zur Aufnahme einer Funktionseinheit 20, die mittels einer Trageinheit 21 an dem Deckelelement 22, welches die vordere Wand 16 ausbildet, festgelegt ist. Gegebenenfalls kann die Funktionseinheit 20 an dem Deckelelement 22 auch lösbar festlegbar sein.

Die Trageinrichtung kann beispielsweise eine Tragplatte, aber alternativ auch eine eine Verlagerung der Funktionseinheit 20 ermöglichende Einrichtung, beispielsweise eine Teleskop- oder eine Schienenanordnung sein.

Das Deckelelement 22 ist in seinem befestigten Zustand gemäß Fig. 1 um eine im Bereich eines Lagerauges liegende Schwenkachse 23 relativ zum Halterahmen 14 und damit zugleich auch relativ zu dem am Halterahmen 14 festgelegten Transportbehältnis 15 schwenkbar.

In seinem gemäß Fig. 1 dargestellten festgelegten und den Innenraum 19 verschließenden Zustand ist ein in Fig. 1 nicht dargestelltes, sich in Erstreckungsrichtung S am nicht dargestellten oberen Rand des Deckelelementes 20 befindliches Riegelelement, kooperierend mit einem entsprechenden Einbaurahmenbereich vorgesehen. Dieses Riegelelement entspricht einem in der Fig. 2 der DE 101 32 081 A1 ebenfalls zwar nicht detailliert dargestellten, mittels einer dort mit dem Bezugszeichen 24 bezeichneten Betätigungstaste lösbaren Riegelelement. Entscheidend ist, dass das Deckelelement 22 gemäß Fig. 1 auch in seinem in den Figuren nicht dargestellten oberen oder Kopfbereich an dem Halterahmen oder an dem Transportbehältnis 15 in seiner Schließposition gemäß Fig. 1 festlegbar ist.

Das Deckelelement 22 ist gemäß den Figuren 1 und 2 mittels einer Befestigungsvorrichtung 24 fahrzeugseitig festlegbar.

Die Befestigungsvorrichtung 24 weist hierzu einen fahrzeugseitig um eine Schwenkachse 23 schwenkbar festgelegten Scharnierflansch 28 auf, der bei dem Ausführungsbeispiel Bestandteil des Transportbehältnisses 15 ist. Alternativ kann auch vorgesehen sein, den Scharnierflansch 28 oder ein anderes Teil der Befestigungsvorrichtung 24 als Bestandteil des Halterahmens 14 auszubilden.

Der Scharnierflansch 28 weist eine Ausnehmung 29 auf, in die ein Schnapphaken 27, der um eine deckelelementseitige Schwenkachse 26 schwenkbar ist, eintauchen kann. Gemäß Fig. 1 ist der Scharnierflansch 28 in einer am Deckelelement 22 angeordneten Aufnahme 30 befindlich. In diesem Zustand durchgreift der Schnapphaken 27 mit seinem freien Ende die Ausnehmung 29.

Um das Deckelelement 22 zu lösen, kann das Betätigungselement 25 von einem Benutzer derart betätigt werden, dass eine Verschwenkung des Schnapphakens 27 und des Betätigungselementes 25 entgegen dem Uhrzeigersinn der Fig. 1 um die Schwenkachse 26 erfolgt. In einer derartigen Position gemäß Fig. 2 gibt der Schnapphaken 27 die Ausnehmung 29 frei und erlaubt ein Lösen des Deckelelementes 22 von der fahrzeugseitigen Befestigungsstelle 28.

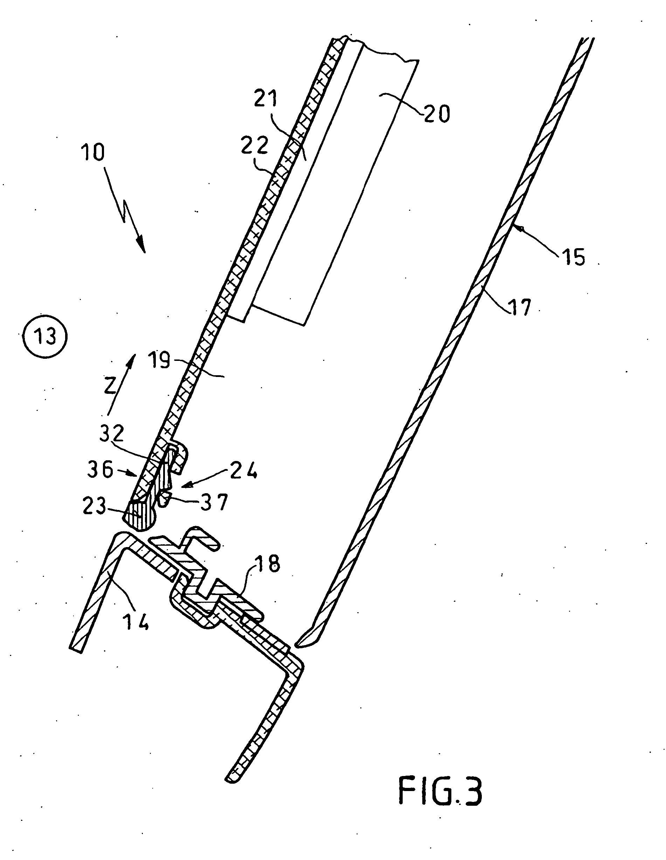

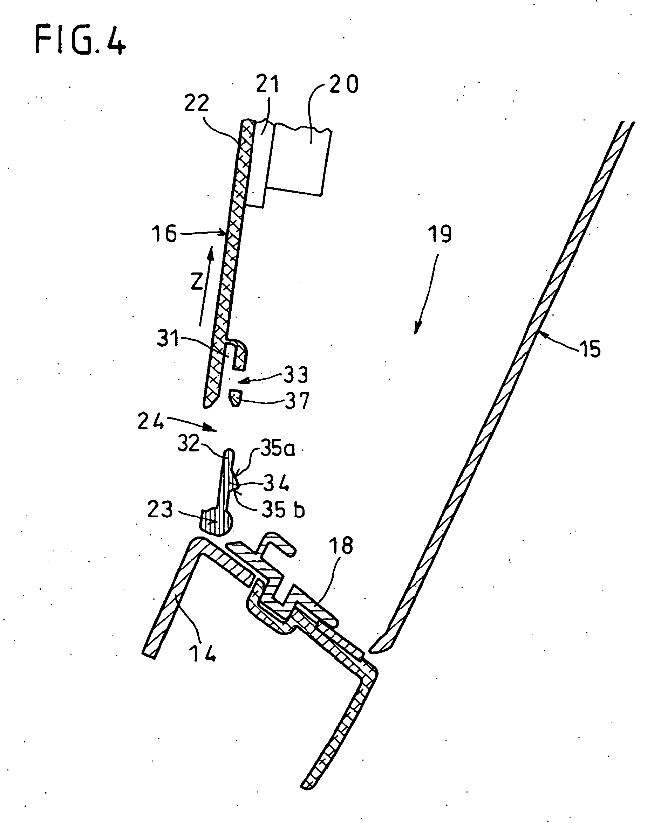

Eine alternative Ausgestaltung gemäß dem Ausführungsbeispiel der Figuren 3 und 4 sieht eine wiederum am freien, bezüglich den Figuren unteren Rand des Deckelelementes 22 angeordnete Aufnahme 31 für ein geringfügig verändertes Schamierflanschelement 32 auf. Das Scharnierflanschelement 32 weist eine Nocke 34 mit zwei Steuerflächen 35a, 35b auf, welche in eine Ausnehmung oder Nut 33 am Deckelelement 22 eintauchen kann.

Gemäß Fig. 3 befindet sich das Deckelelement 22 in seinem am Fahrzeug festgelegten Zustand. Ebenfalls ist der Scharnierflansch 32 Bestandteil des Transportbehältnisses 15 beziehungsweise des Einbaurahmens 18. Zum Lösen des Deckelelementes 22 von der fahrzeugseitigen Befestigungsstelle 36 kann beispielsweise eine genügend große Zugkraft in Zugrichtung Z auf das Deckelelement 22 ausgeübt werden.

Dies bedarf jedoch, ausgehend von dem Schließzustand des Deckelelementes 22 gemäß Fig. 3, zunächst einer zumindest geringfügigen Verschwenkung des Deckelelementes 22 entgegen den Uhrzeigersinn um die Schwenkachse 23, da eine Zugbewegung des Deckelelementes in Zugrichtung Z gemäß Fig. 3 von dem dort nicht dargestellten Halterahmenkopf verhindert ist. Zum Verschwenken des Deckelelementes 22 aus seiner Schließposition gemäß Fig. 3 in seine verschwenkte Öffnungsposition gemäß Fig. 4 muss hierzu zunächst das deckelseitige, in den Figuren nicht dargestellte, dem Kopfbereich des Deckelelementes 22 zugeordnete Riegelelement gelöst werden.

Die Steuerflächen 35a, 35b an der Nocke 34 sind derart ausgebildet, dass ein Aufsetzen des Deckelelementes 22 auf den Scharnierflansch 32 mit einem geringeren Kraftaufwand möglich ist als das Lösen des Deckelelementes 22 von dem Scharnierflansch 32. Die steilere Steuerfläche 35b erfordert größere Auszugskräfte.

Alternativ kann auch vorgesehen sein, den Flanschabschnitt 37 des Deckelelementes 22 mit einem nicht dargestellten Betätigungselement zu versehen, der bei Betätigung das freie Ende des Flanschabschnittes 37 von der Nocke 34 abhebt und ein Lösen des Deckelelementes 22 ermöglicht.

Das in den Figuren lediglich schematisch angedeutete Funktionsteil 20 (Funktionseinheit) stellt eine mit dem Deckelelement 22 handhabbare Einheit dar. Es kann sich beispielsweise um ein Audio-CD-, Videokassetten-, DVD- od. dgl. Abspielgerät, gegebenenfalls mit einen zugehörigen Monitor handeln. Auch Spielkonsolen, gegebenenfalls mit Monitor, Becher- oder Tassenhalter, Staufächer od. dgl. Module kommen als Funktionseinheit 20 in Betracht.

Während das Deckelelement 22 in seiner Schwenkposition gemäß Fig. 2, auch für den Fall, dass es entlang der Richtung des Doppelpfeiles y an den Scharnierflansch heranbewegt und fahrzeugseitig durch die Befestigungsvorrichtung 24 festgelegt ist, die Zugangsöffnung 38 des Innenraumes 19 des Transportbehältnisses 15 nicht verschließt, ist das Transportbehältnis 15 in der Schwenkposition des Deckelelementes 22 gemäß Fig. 1 vollständig geschlossen.

Die Befestigungsvorrichtung 24, die beispielsweise das Betätigungselement 25, den Schnapphaken 27 und den Scharnierflansch 28 umfasst, ist vorteilhafterweise crashsicher ausgebildet. Durch eine stabile Auslegung der Elemente der Befestigungsvorrichtung 24, beispielsweise auch durch Wahl entsprechender Materialien oder durch Anordnung metallischer Kraftleitungselemente, können im Crashfall auftretende, von einer großen Masse der Funktionseinheit auf das Deckelelement ausgeübte Kräfte aufgefangen werden.

## Patentansprüche

1. Transportbehälter-Einrichtung (10) für Fahrzeuge, insbesondere für den sitzlehnen- oder kofferraumwandseitigen Einbau in Personenkraftwagen, mit einem fahrzeugfesten Halterahmen (14), an dem ein Transportbehälter (15) festgelegt ist, der zumindest eine von einem Deckelelement (22) verschließbare Öffnung (38) zur Ermöglichung eines Zugangs zu dem Innenraum (19) des Transportbehälters aufweist, **dadurch gekennzeichnet, dass** dem Deckelelement eine Funktionseinheit (20), wie z. B. Spielkonsole, DVD-Abspielgerät, Monitor, Becherhalter, od. dgl. zugeordnet ist, dass das Deckelelement von dem Transportbehälter (15) und/oder von dem Halterahmen (14), insbesondere zum Zwecke des Austausches mit einem weiteren Deckelelement, vollständig lösbar ist, dass eine Befestigungsvorrichtung (24) für das Deckelelement vorgesehen ist, mit der das Deckelelement fahrzeugseitig lösbar festlegbar ist, und dass das fahrzeugseitig festgelegte Deckelelement (22) relativ zu dem Halterahmen (14) schwenkbar angeordnet ist.

2. Transportbehälter-Einrichtung nach Anspruch 1, **dadurch gekennzeichnet, dass** der Transportbehälter (15) einer Kfz-Fondlehne (11) zugeordnet ist.

3. Transportbehälter-Einrichtung nach Anspruch 1 oder 2, **dadurch gekennzeichnet, dass** das in seinem festgelegten Zustand (Fig. 1) befindliche Deckelelement (22) eine in Fahrtrichtung (x) des Fahrzeugs vordere Begrenzungswand (16) des Innenraums (19) des Transportbehältnisses ausbildet.

4. Transportbehälter-Einrichtung nach einem der Ansprüche 1 bis 3, **dadurch gekennzeichnet, dass** ein Betätigungselement (25) zur Betätigung, insbesondere zur Lösung, der Befestigungsvorrichtung (24) vorgesehen ist.

5. Transportbehälter-Einrichtung nach Anspruch 4, **dadurch gekennzeichnet, dass** das Betätigungselement (25) nur bei geöffnetem Deckelelement (22), (Fig. 2) zugänglich ist.

6. Transportbehälter-Einrichtung nach einem der vorgenannten Ansprüche, **dadurch gekennzeichnet, dass** das Deckelelement (22) eine Tragvorrichtung (21) für das Funktionsteil (20) aufweist.

7. Transportbehälter-Einrichtung nach einem der vorgenannten Ansprüche, **dadurch gekennzeichnet, dass** die Befestigungsvorrichtung (24) als Schnappverbindung ausgebildet ist.

8. Transportbehälter-Einrichtung nach Anspruch 7, **dadurch gekennzeichnet, dass** die Befestigungsvorrichtung einen Schnapphaken (27, 37) aufweist.

9. Transportbehälter-Einrichtung nach einem der vorgenannten Ansprüche, **dadurch gekennzeichnet, dass** der Transportbehälter (15) an dem Halterahmen (14) lösbar festgelegt ist.

## Claims

1. Carrying container system (10) for vehicles, in particular for fitting in the seat backrest or luggage compartment wall side of a passenger vehicle, with a retaining frame (14) fixedly secured to the vehicle to which is attached a carrying container (15), which has at least one opening (38) which can be closed by a cover element (22) to permit access to the interior (19) of the carrying container, **characterised in that** the cover element co-operates with a functional system (20), such as a games console, DVD player, monitor, cup holder or similar for example, the cover element can be completely detached from the carrying container (15) and/or from the retaining frame (14), in particular for the purpose of replacing it with another cover element, a fixing mechanism (24) is provided for the cover element by means of which the cover element can be releasably affixed to the vehicle, and the cover element (22) affixed to the vehicle is disposed so that it is able to pivot relative to the retaining frame (14).

2. Carrying container system as claimed in claim 1, **characterised in that** the carrying container (15) co-operates with a rear seat backrest of the vehicle (11).

3. Carrying container system as claimed in claim 1 or 2, **characterised in that,** in its affixed state (Fig. 1), the cover element (22) forms a front boundary wall (16) of the interior (19) of the carrying container in the travel direction (x) of the vehicle.

4. Carrying container system as claimed in one of claims 1 to 3, **characterised in that** an operating element (25) is provided for operating purposes, in particular for releasing the fixing mechanism (24).

5. Carrying container system as claimed in claim 4, **characterised in that** the operating element (25) is accessible only when the cover element (22) is open (Fig. 2).

6. Carrying container system as claimed in one of the preceding claims, **characterised in that** the cover element (22) has a support device (21) for the functional part (20).

7. Carrying container system as claimed in one of the preceding claims, **characterised in that** the fixing mechanism (24) is a snap-fit connection.

8. Carrying container system as claimed in claim 7, **characterised in that** the fixing mechanism has a snap-fit hook (27, 37).

9. Carrying container system as claimed in one of the preceding claims, **characterised in that** the carrying container (15) is releasably affixed to the retaining frame (14).

## Revendications

1. Conteneur de transport (10) pour véhicules, en particulier pour montage, côté paroi de dossier ou de coffre à bagages, dans des voitures particulières, avec un cadre de maintien (14) fixé au véhicule, auquel est fixé un conteneur de transport (15), présentant au moins une ouverture (38), susceptible d'être obturée par un élément formant couvercle (22), afin de permettre un accès à l'espace intérieur (19) du récipient de transport, **caractérisé en ce qu'**à l'élément formant couvercle est associée une unité fonctionnelle (20), telle que, par exemple, une console de jeu, un lecteur de DVD, un moniteur, un porte-gobelet, ou analogue, **en ce que** l'élément formant couvercle est désolidarisable en totalité du conteneur de transport (15) et/ou du cadre de maintien (14), en particulier aux fins de remplacement par un autre élément formant couvercle, **en ce qu'**est prévu pour l'élément formant couvercle un dispositif de fixation (24), à l'aide duquel l'élément formant couvercle (22), fixé côté véhicule, est disposé de façon à pouvoir pivoter par rapport au cadre de maintien (14).

2. Conteneur de transport selon la revendication 1, **caractérisé en ce que** le conteneur de transport (15) est associé à un dossier arrière de véhicule (11).

3. Conteneur de transport selon la revendication 1 ou 2, **caractérisé en ce que** l'élément formant couvercle (22), se trouvant à son état fixé (Fig. 1), constitue une paroi de limitation avant (16), en observant dans la direction de roulage (x) du véhicule, de l'espace intérieur (19) du conteneur de transport.

4. Conteneur de transport selon l'une des revendications 1 à 3, **caractérisé en ce qu'un** élément d'actionnement (25) est prévu, pour l'actionnement, en particulier pour le détachement, du dispositif de fixation (24).

5. Conteneur de transport selon la revendication 4, **caractérisé en ce que** l'élément d'actionnement (25) n'est accessible que lorsque l'élément formant couvercle (22) est ouvert (Fig. 2).

6. Conteneur de transport selon l'une des revendications précédentes, **caractérisé en ce que** l'élément formant couvercle (22) présente un dispositif support (21) pour la partie fonctionnelle (20).

7. Conteneur de transport selon l'une des revendications précédentes, **caractérisé en ce que** le dispositif de fixation (24) est réalisé sous la forme d'une liaison à clipsage.

8. Conteneur de transport selon la revendication 7, **caractérisé en ce que** le dispositif de fixation présente un crochet d'enclipsage (27, 37).

9. Conteneur de transport selon l'une des revendications précédentes, **caractérisé en ce que** le conteneur de transport (7) est fixé de façon désolidarisable sur le cadre de maintien (14).
